# EUROPEAN PATENT APPLICATION

(11) **EP 2 854 323 A1**
(43) Date of publication of application: **01.04.2015**
(21) Application number: 13186446.4
(22) Date of filing: 27.09.2013
(51) Int. Cl.: H04L 5/00, H04W 28/06, H04W 88/08, H04W 92/12

(54) **A method of transmitting GSM samples over a CPRI channel**

(71) Applicant: Kapsch Carriercom AG, 1120 Wien (AT)
(72) Inventor: Lopes, Vincent, 91440 BURES-SUR-YVETTE (FR); Rux, David, 78390 BOIS d'ARCY (FR)
(74) Representative: Weiser, Andreas

(57) **Abstract**

The present invention relates to a method of transmitting GSM samples over a CPRI channel,

the GSM samples (1) being grouped into GSM bursts (2) in subsequent GSM burst periods (Gᵢ) of a first, lower periodicity rate, and

the CPRI channel being comprised of periodically transmitted CPRI hyperframes (3) of a second, higher periodicity rate, comprising,

for each GSM burst period (Gᵢ), filling the GSM samples (1) of said GSM burst period (Gᵢ) successively into a subset (8) of those CPRI hyperframes (3) which are transmitted during said GSM burst period (Gᵢ).

## Description

The present invention relates to a method of transmitting GSM samples over a CPRI channel.

CPRI (common public radio interface) is an interface standard to connect a DM (digital module) or REC (radio equipment control) to a remote RRH (remote radio head) or RE (radio equipment) in a BTS (base transceiver station) of a radio subsystem in a 3GPP (third generation partnership project) communication system such as GSM (global system for mobile communications, groupe spécial mobile) or GSM-R (GSM-rail for railway communications). Whenever reference is made to GSM in the present context, this also comprises GSM-R.

Present CPRI channels come in mainly two variants, the earlier CPRI specification V4.2 of September 29, 2010 and the more recent CPRI specification V5.0 of September 21, 2011, both downloadable from www.cpri.info. GSM specifications and GSM sample definitions, as far as relevant in the present context, are defined in the following technical specifications downloadable from www.3gpp.org: 3GPP TS 45.001, V9.3.0, "Physical layer on the radio path"; 3GPP TS 45.005, V9.8.0, "Radio transmission and reception"; 3GPP TS 45.008, V9.8.0, "Radio subsystem link control"; and 3GPP TS 45.010, V9.0.0 "Radio subsystem synchronization".

While CPRI is primarily intended to transport third (3G) and fourth (4G) generation 3GPP data such as UMTS, LTE and Wi-MAX data, and therefore did not support second generation (2G) legacy data of GSM systems in its V4.2 version, such GSM support was introduced in version V5.0 of the CPRI standard. However, present off-the-shelf hardware, in particular for embedded chip systems, still follows CPRI standard V4.2.

Therefore, there is a need to carry GSM samples over existing hardware between DMs and RRHs to implement BTSs for GSM (and GSM-R) with cost-efficient market components. It is an object of the invention to face this challenge and provide a method for transmitting GSM samples over a legacy CPRI channel, which meets these demands.

To this end, the invention provides for a method of transmitting GSM samples over a CPRI channel,
the GSM samples being grouped into GSM bursts in subsequent GSM burst periods of a first, lower periodicity rate, and
the CPRI channel being comprised of periodically transmitted CPRI hyperframes of a second, higher periodicity rate, comprising,
for each GSM burst period, filling the GSM samples of said GSM burst period successively into a subset of those CPRI hyperframes which are transmitted during said GSM burst period.

In this way, the inventive method implements a rate adaptation from GSM rate to CPRI rate and vice-versa in which CPRI components, such as a CPRI hardware accelerator running on embedded DSP processor chips, "thinks" that it deals with 3G or 4G samples such as UMTS samples, without any need to modify the CPRI channel components. BTSs for 3G and 4G systems using CPRI channels in their connections between DMs and RRHs can thus be retro-fit for GSM (2G) capabilities. The inventive method can be used both for downlink and uplink CPRI channels.

Preferably, said subset is shifted from the beginning of said GSM burst period. This ensures a sufficient time buffer between GSM bursts to process their disassembling (distribution) and re-assembling (recombination) over the successive CPRI hyperframes.

In a preferred practical embodiment for a CPRI line bit rate according to Option 3 of the CPRI standard, the beginning of every 26th GSM burst period coincides with the beginning of every 225th CPRI hyperframe to obtain a periodic mapping between GSM and CPRI rates.

According to a preferred embodiment of the invention each GSM sample of less than 16 bits is extended with padding bits up to 16 bits. CPRI samples transported over the CPRI channel have a bit width of 16 bits, so that padding the GSM samples up to this CPRI width of 16 bits avoids costly bit manipulations or stuffing on the sample level when filling the GSM samples into the CPRI samples contained in the CPRI frames of the CPRI hyperframes. Besides, the GSM samples arrangement in large blocks of several hyperframes of the present invention ensures that a minimal amount of CPU usage is done, by contrast with the CPRI V5 methods which interleaves GSM samples and stuffing bits at a lower scale.

In a further preferred embodiment of the invention at least one CPRI frame of at least one CPRI hyperframe of each subset is used to transport GSM control data, e.g. GSM frequency hopping information, dynamic power information, et cet. This emulates the ability of GSM antenna-carrier specific control data transport of CPRI V5 in legacy CPRI V4 components. GSM control data is transmitted in the same way as the GSM load data, i.e. the GSM samples, by filling the control data into CPRI samples of a CPRI frame of a hyperframe.

Further features and benefits of the invention will now become apparent from the following detailed description of preferred embodiments thereof, given under reference to the enclosed drawings, in which:
Figs. 1 and 2 show the timing definitions in GSM and CPRI, respectively;
Fig. 3 shows the bit padding of a GSM sample;
Fig. 4 shows the structure of a possible type of a basic CPRI frame; and
Fig. 5 shows a timing diagram of GSM samples transmitted over a CPRI channel according to the method of the invention.

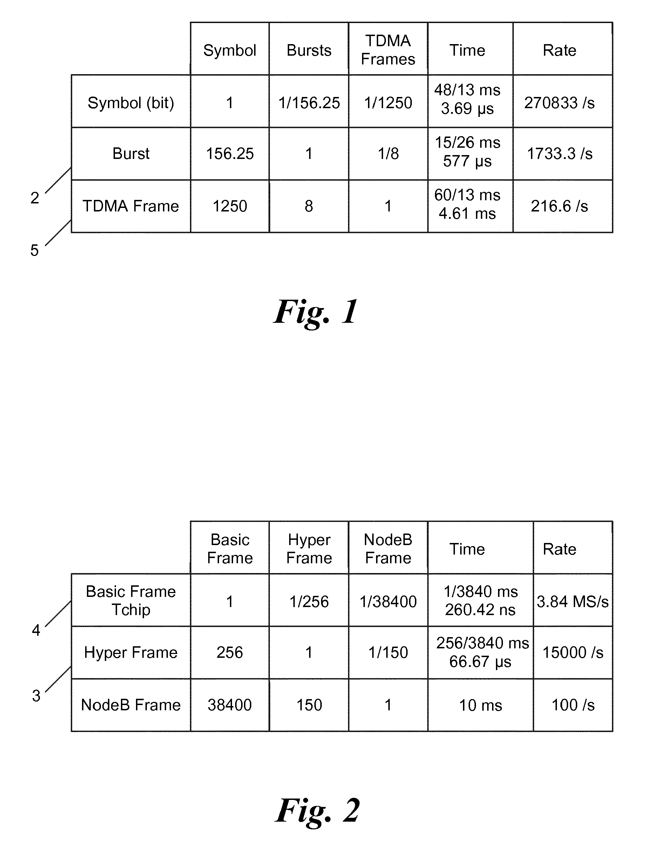

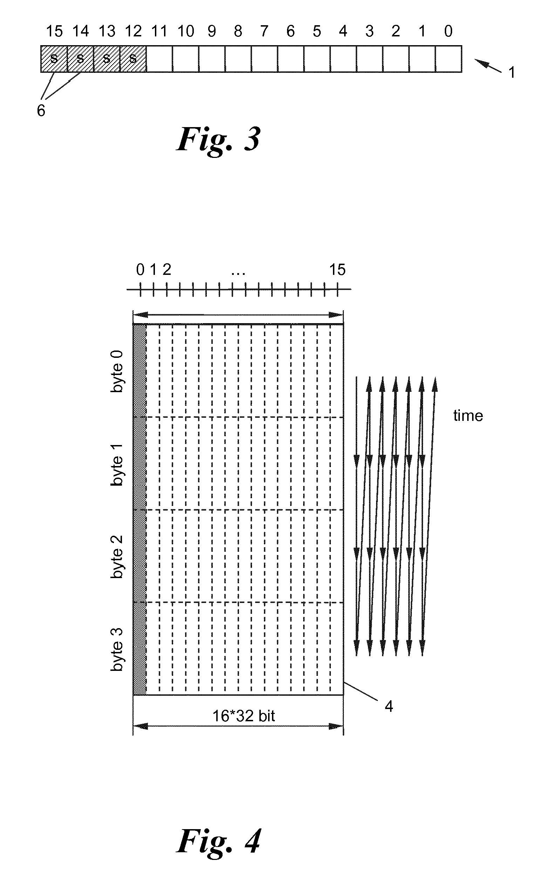

For a definition of GSM and CPRI standards used herein, reference is made to the above-mentioned standards of which Figs. 1 and 2 show basic timing relations of GSM and CPRI, respectively. As shown in Fig. 1, GSM samples 1 (conf. Fig. 3) are transported in GSM bursts 2 with a period of 15/26 ms or 577 µs. As shown in Fig. 2, a CPRI hyperframe 3 comprised of 256 (basic) CPRI frames 4 (conf. Fig. 4) has a period of 256/3840 ms or 66.67 µs. Therefore, the Least Common Multiple between GSM and CPRI timing is:
26 GSM bursts = 225 CPRI hyper frames.

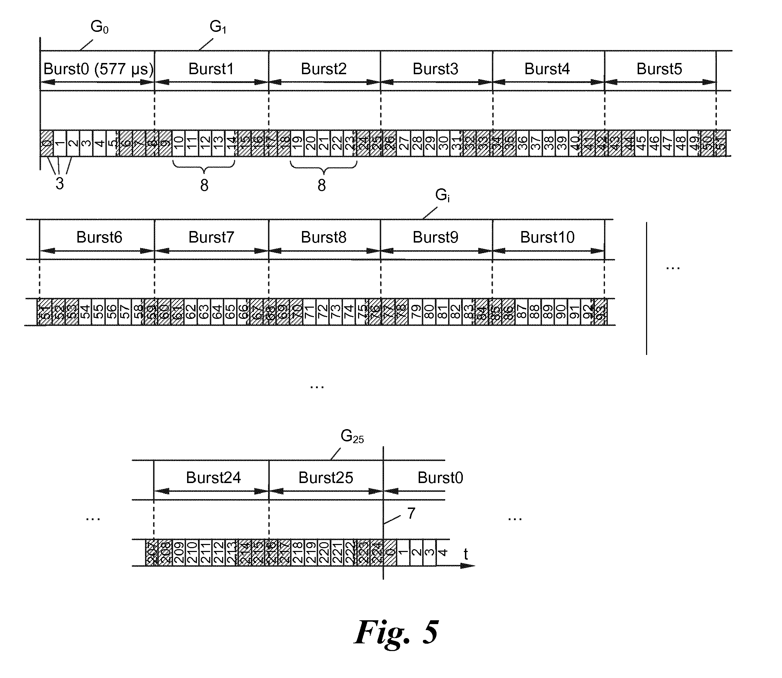

The common periodicity of GSM and CPRI is therefore, in this embodiment, 26 GSM bursts or 225 CPRI hyper frames, respectively, and is hence also the common periodicity of the method to transmit GSM samples over a CPRI channel now discussed with reference to Fig. 5.

Fig. 5 shows a number of 26 GSM burst periods G₀, G₁,... Gᵢ,... G₂₅ into which GSM bursts 2 (Fig. 1) of a multitude of concurrently transported GSM channels fall, with the above-mentioned GSM timing. Over the same time axis t a number of 225 CPRI hyperframes 3 of a CPRI channel are depicted which are used to transport the GSM samples contained in the GSM bursts 2. For example, each GSM burst 2 of one of the TDMA frames 5 of one of more GSM channels contains 156.25 bits, encoding GSM samples.

On the other hand, each CPRI hyperframe 3 is comprised of a number of 256 CPRI frames 4, one of which is shown in Fig. 4 for a CPRI line bit rate option 3, i.e. 2457.6 Mbit/s (4 x 614.4Mbit/s), as comprising 16 double-words (2 x 16 bits), each word of 2 byte = 2 x 8 bit encoding an inphase (I) and quadrature (Q) sample of native 3G or 4G data for the CPRI standard.

As shown in Fig. 3, GSM samples 1 in the GSM bursts 2, when combined over several TDMA frames 5 and several GSM channels, could be encoded with a bit width less than 16 bits, typically 12 bits for the downlink path. To match the GSM samples 1 better to the double-words of the CPRI frames 4 of the CPRI hyperframes 3, the GSM samples 1 are extended (padded) with stuffing bits 6 to a bit width of 16 bits, fitting into one double-word of a CPRI frame 4.

According to Fig. 5, the GSM samples 1 occurring in the GSM bursts 2 of any of the 26 GSM burst periods Gᵢ are now "filled" successively into some of those CPRI hyperframes 3 which are transmitted on the CPRI channel during that burst period Gᵢ which lies between the beginning of said GSM burst(s) 2 and the beginning of the subsequent GSM burst (s) 2 of the next period Gᵢ₊₁.

Due to the periodicity of 26 GSM bursts vs. 225 CPRI hyperframes 3 the end/start of a GSM periodicity period Gᵢ somewhere between the first period G₀ and the 26th period G₂₅ does not necessarily match with the start/end of a CPRI hyperframe, as shown by the broken lines crossing CPRI hyperframes 3. Only after 26 GSM burst periods G₀ (i.e. the GSM bursts 2 transported therein) the beginning of a next GSM burst 2 coincides with the beginning of the next CPRI hyperframe 3, see the solid line 7 in Fig. 5.

The CPRI hyperframes 3 used in this way for transporting GSM samples 1 are shown in Fig. 5 in white and form a "subset" 8 in every GSM burst period Gᵢ. The subsets 8 are shifted from the beginning of the GSM burst period Gᵢ to the center thereof so that at the beginning and end of a GSM burst period Gᵢ some unused CPRI hyperframes 3 remain, shown shaded in Fig. 5.

At least one CPRI frame 4, preferably the first, of at least one, preferably the first, CPRI hyperframe 3 of each subset 8 is used to transport GSM control data in addition to GSM (load) samples 1, to transport GSM control and timing data over the CPRI channel.

The invention is not restricted to the specific embodiments disclosed herein, but encompasses all variants, modifications and combinations thereof which fall into the scope of the appended claims.

## Claims

1. A method of transmitting GSM samples over a CPRI channel,
the GSM samples (1) being grouped into GSM bursts (2) in subsequent GSM burst periods (Gᵢ) of a first, lower periodicity rate, and
the CPRI channel being comprised of periodically transmitted CPRI hyperframes (3) of a second, higher periodicity rate, comprising,
for each GSM burst period (Gᵢ), filling the GSM samples (1) of said GSM burst period (Gᵢ) successively into a subset (8) of those CPRI hyperframes (3) which are transmitted during said GSM burst period (Gᵢ).

2. The method of claim 1, wherein said subset (8) is shifted from the beginning of said GSM burst period (Gᵢ).

3. The method of claim 1 or 2, wherein the beginning of every 26th GSM burst period (Gᵢ) coincides with the beginning of every 225th CPRI hyperframe (3).

4. The method of any of the claims 1 to 3, wherein each GSM sample (1) of less than 16 bits is extended with padding bits up to 16 bits.

5. The method of any of the claims 1 to 4, wherein at least one CPRI frame (4) of at least one CPRI hyperframe (3) of each subset (8) is used to transport GSM control data.
